(19) Europäisches Patentamt
European Patent Office
Office européen des brevets

(11) **EP 1 939 633 B1**

(12) **EUROPÄISCHE PATENTSCHRIFT**

(45) Veröffentlichungstag und Bekanntmachung des Hinweises auf die Patenterteilung:
**21.05.2014 Patentblatt 2014/21**

(51) Int Cl.:
*G01P 13/04* *(2006.01)* *G01P 13/00* *(2006.01)*
*B60W 50/00* *(2006.01)*

(21) Anmeldenummer: **07023500.7**

(22) Anmeldetag: **05.12.2007**

(54) **Verfahren zur Erfassung der Bewegungsrichtung eines Fahrzeugs**

Method for determining the direction of movement of a vehicle

Procédé destiné à la détermination du sens de déplacement d'un véhicule

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.12.2006 DE 102006061549**

(43) Veröffentlichungstag der Anmeldung:
**02.07.2008 Patentblatt 2008/27**

(73) Patentinhaber: **Schaeffler Technologies GmbH & Co. KG**
**91074 Herzogenaurach (DE)**

(72) Erfinder: **Reuschel, Michael**
**77833 Ottersweier (DE)**

(56) Entgegenhaltungen:
EP-A2- 1 193 151    WO-A1-02/062640
DE-A1-102004 052 783    FR-A1- 2 857 925

**Beschreibung**

Die Erfindung befasst sich mit einem Verfahren zur Erfassung der Bewegungsrichtung eines Fahrzeugs, wobei die Fahrzeuggeschwindigkeit erfasst und mittels eines mathematischen Bewegungsmodells die Bewegungsrichtung prognostiziert wird nach dem Oberbegriff des unabhängigen Anspruchs 1.

Stand der Technik

Kraftfahrzeuge weisen im Stand der Technik üblicherweise Raddrehzahlsensoren auf, um zum Beispiel Antiblockiersysteme (ABS) mit Aussagen über den Bewegungszustand des Rades oder mehrerer Räder zu versorgen. Diese Drehzahlsensoren ermitteln zwar üblicherweise den Betrag der Raddrehzahl, jedoch nicht die Drehrichtung. Damit kann mittels der der Raddrehzahlsensoren keine Aussage darüber getroffen werden, ob sich das entsprechende Fahrzeug vorwärts oder rückwärts bewegt. Die Kenntnis der Bewegungsrichtung ist jedoch insbesondere bei Fahrzeugen mit automatisierten Getrieben im Antriebsstrang, wie beispielsweise einem automatisierten Schaltgetriebe oder einem Parallelschaltgetriebe von wesentlicher Bedeutung, um überhaupt festzustellen, ob das Fahrzeug in die durch die Gangwahl bevorzugte Fahrzeugrichtung fährt.
Um die Rollrichtung des Kraftfahrzeugs zu ermitteln, könnten zwar prinzipiell bekannte Drehzahlsensoren eingesetzt werden, die eine Information über die Drehrichtung und nicht nur über den Absolutbetrag der Drehzahl liefern, diese werden jedoch üblicherweise aus Kostengründen in Fahrzeugen nicht eingesetzt.
Die Internationale Patentanmeldung WO 02/062640 offenbart ein Verfahren zur Fahrtrichtungserkennung eines Fahrzeugs während des Anfahrens. Beschrieben werden verschiedene Methoden, welche unter Berücksichtigung von Fahrzeuggrößen wie dem Motormoment, dem Kupplungszustand und der Fahrbahnneigung auf die Fahrtrichtung schließen. Ein Verfahren, welches die wiederholte Umschaltung der Fahrtrichtungsanzeige bei langsamen Geschwindigkeiten vermeiden soll, ist in der Europäischen Patentanmeldung EP 1 193 151 A2 offenbart. Weiterhin zeigt die Französische Anmeldung 2 857 925 A1 ein Verfahren, in welchem das Übersetzungsverhältnis des Getriebes und eventuell die Hangneigung zur Bestimmung der Fahrtrichtung herangezogen werden.

Aufgabe der Erfindung

Die Aufgabe der Erfindung ist es zuverlässiges und/oder einfaches und/oder preisgünstigeres Verfahren zur Richtungserkennung bereitzustellen.

Beschreibung der Erfindung

Die Aufgabe wird gelöst durch ein Verfahren nach den Merkmalen des unabhängigen Anspruchs 1, insbesondere durch ein Verfahren zur Erkennung der Bewegungsrichtung eines Fahrzeugs, wobei die Fahrzeuggeschwindigkeit erfasst, mittels eines mathematischen Bewegungsmodells die Bewegungsrichtung geschätzt und unter Berücksichtigung sowohl der Fahrzeuggeschwindigkeit als auch des von der Kupplung übertragenen Drehmoments die Schätzung des Bewegungsrichtungswert angepasst wird.
Es wird also in einem ersten Schritt durch ein schon vorher feststehendes mathematisches Bewegungsmodell errechnet, ob das Fahrzeug nach vorne oder nach hinten fahren wird oder fährt. Die für die Schätzung erforderlichen Parameter können zum Teil oder ganz während der Fahrt ermittelt werden oder während des Fahrzeugstillstands erfasst werden. Das Bewegungsmodell wird bevorzugt als eine Kraftgleichung aufgestellt werden, aus der sich die Beschleunigung des Fahrzeugs schätzen lässt und somit auch die Bewegungsrichtung des Fahrzeugs, wenn die Anfangsgeschwindigkeit bekannt ist.
In einem zweiten Schritt wird die aus der Kraftgleichung prognostizierte Fahrzeugbeschleunigung und/oder Bewegungsrichtung nun mit der Fahrstufenwahl in Relation gesetzt. Entspricht die durch die Fahrstufenwahl ausgewählte bevorzugte Fahrzeugbewegungsrichtung der geschätzten Bewegungsrichtung, so kann davon ausgegangen werden, dass auch mit höheren Kupplungsmomenten die Fahrzeugbewegungsrichtung beibehalten wird und die geschätzte Bewegungsrichtung kann mit der bevorzugten gleichgesetzt werden.
Entspricht die prognostizierte Fahrzeugbewegungsrichtung nicht der durch die Fahrstufenwahl bevorzugte Fahrzeugbewegungsrichtung, so geht das Verfahren davon aus, dass bei höheren Kupplungsmomenten sich die Fahrzeugbewegungsrichtung umkehren wird. So kann bevorzugt durch die Ermittlung der Fahrzeuggeschwindigkeit eine solche Bewegungsrichtungsumkehr detektiert werden. Nach der Bewegungsrichtungsumkehr, die bevorzugt durch den, wenn auch nur kurzzeitigen Stillstand des Fahrzeugs, ausgezeichnet ist, wird das Verfahren die nun vorliegende Bewegungsrichtung als entsprechend der bevorzugten Fahrzeugbewegungsrichtung, die schon durch die Gangwahl vorgegeben ist, kennzeichnen.
Bevorzugt wird die Fahrzeuggeschwindigkeit zumindest teilweise mittels Drehzahlsensoren ermittelt wird. Diese Drehzahlsensoren werden für eine Vielzahl von Anwendungsmöglichkeiten im Fahrzeug verwendet und sind oftmals schon im Fahrzeug vorhanden. Mit ihnen kann einfach die Geschwindigkeit des Fahrzeugs gemessen werden, wenn der Umfang der Räder bekannt ist. Durch die Verwendung der Drehzahlsensoren kann das Verfahren erkennen, ob gerade eine Bewegungsumkehr stattgefunden hat bzw. ob das Fahrzeug zum Stillstand gekommen ist. So kann gerade wenn die durch das mathematische Modell vorhergesagte Bewegungsrichtung nicht mit der durch die Gangwahl vorgegebenen Bewegungsrichtung übereinstimmt, bei einem von der Kupplung übertragenen Drehmoment davon ausgegangen werden, dass wenn die Drehzahlsensoren eine Raddrehzahl im Wesentlichen von Null feststellen es sich hierbei um eine Bewegungsrichtungsumkehr handelt.

Insbesondere berücksichtigt das mathematische Bewegungsmodell zumindest teilweise fahrzeugspezifische Faktoren. Solche Faktoren können die Masse des Fahrzeugs, der Luftwiderstand des Fahrzeugs, der Wirkungsgrad etc. sein. Daneben können auch weitere Faktoren, wie die Hangabtriebskraft, die sich ergibt, wenn das Fahrzeug auf einer schiefen Ebene steht, bzw. die Steigung des Untergrunds, in das mathematische Bewegungsmodell einflie-ßen.

Erfindungsgemäß wird das Vorzeichen der ermittelten Bewegungsrichtung bei einem Nulldurchgang der Fahrzeuggeschwindigkeit, bzw. der Drehzahl geändert. Ein Nulldurchgang heißt dabei, dass der entsprechende Wert bevor und nachdem er einen von Null verschiedenen Wert aufweist, einen oder mehrere Werte von im wesentlichen Null annimmt. Bevorzugt kann ein Nulldurchgang auch enger gefasst werden, indem nachdem von Null verschiedene Werte mit einem im wesentlichen negativen Gradient von einem oder mehreren Werten, die im wesentlichen Null sind gefolgt werden, an die sich wiederum von im wesentlichen Null verschiedene Werte anschließend, die einen positiven Gradienten aufweisen.

Insbesondere kann die Bewegungsrichtung des Fahrzeugs beim Anfahren mittels dem mathematischen Bewegungsmodells prognostiziert werden, während das Fahrzeug still steht. Gerade beim Anfahren oder Kriechens des Fahrzeugs kommt es häufig zu einer kurzzeitigen Bewegungsrichtungsumkehr. So ist es möglich, dass wenn das Fahrzeug am Hang zum Stehen gekommen ist, das applizierte Kupplungsmoment nicht ausreicht, dass beim Anfahren sofort die auf das Fahrzeug wirkende Hangabtriebskraft überwunden wird. In solchen Situationen kann es dazu kommen, dass das Fahrzeug evtl. nur kurzzeitig in die weniger bevorzugte Fahrrichtung rollt. Wird als Folge des Zurückrollens oder im verlauf der normalen Steuerstrategie ein höheres Drehmoment von der Kupplung übertragen, so wird die Fahrt in die weniger bevorzugte Richtung verlangsamt und es tritt eine Fahrrichtungsumkehr ein. Da gerade dieses Zurückrollen des Fahrzeugs vom Fahrer als unangenehm empfunden wird, ist es bevorzugt, wenn auch variable Parameter, wie die Hangabtriebskraft schon bei Beginn der Ankriechphase bekannt sind und so von dem System korrekt erkannt werden kann, ob eine Beschleunigung in die weniger bevorzugte Richtung auftreten kann. Dazu wird bevorzugt diese geschätzte Beschleunigung schon während der Stillstandsphase berechnet. Die dafür nötigen Parameter können entweder schon vorliegen, wie z.B. der $C_w$ Wert oder sie können während der Stillstandsphase ermittelt werden, wie z.B. das Gewicht des Fahrzeugs. Auch lassen sich Parameter, insbesondere solche, die durch einen Fahrzeugbeobachter geschätzt werden, auch während der Bewegungsphase vor dem Fahrzeugstillstand ermitteln und in dafür vorgesehenen Speichermitteln speichern, so dass sie bei der Berechnung der Beschleunigung bzw. der Bewegungsrichtung vorliegen.

Bei der Prognose der Bewegungsrichtung mittels des mathematischen Bewegungsmodells wird die Steigung des Untergrundes berücksichtigt. Oftmals tritt eine Bewegungsumkehr auf, wenn das Fahrzeug an einem schiefen Untergrund steht. Dabei wirkt die Hangabtriebskraft entweder beschleunigend auf das Fahrzeug oder hemmend, je nach gewünschter Bewegungsrichtung und Hangneigung. Durch die Berücksichtigung der Hangantriebskraft bzw. der Hangsteigung kann nun eine bessere Schätzung der Anfangsbeschleunigung durch das mathematische Modell und somit auch eine bessere Vorhersage der anfänglichen Bewegungsrichtung erreicht werden.

Die Steigung wird durch mindestens einen Fahrzeugbeobachter ermittelt. Ein Beobachter kann aus verschiedenen Parametern einen nicht gemessenen oder nicht messbaren Parameter ermitteln. So kann aus der Beschleunigung des Fahrzeugs die Hangabtriebskraft die auf das Fahrzeug wirkt erhalten werden. Solche Beobachter sind insbesondere vorteilhaft, da sie schon vorhandene Sensoren nutzen können, um einen weiteren Parameter zu erhalten.

Die Erfindung wird nun anhand der Zeichnungen näher erläutert. Dabei zeigt

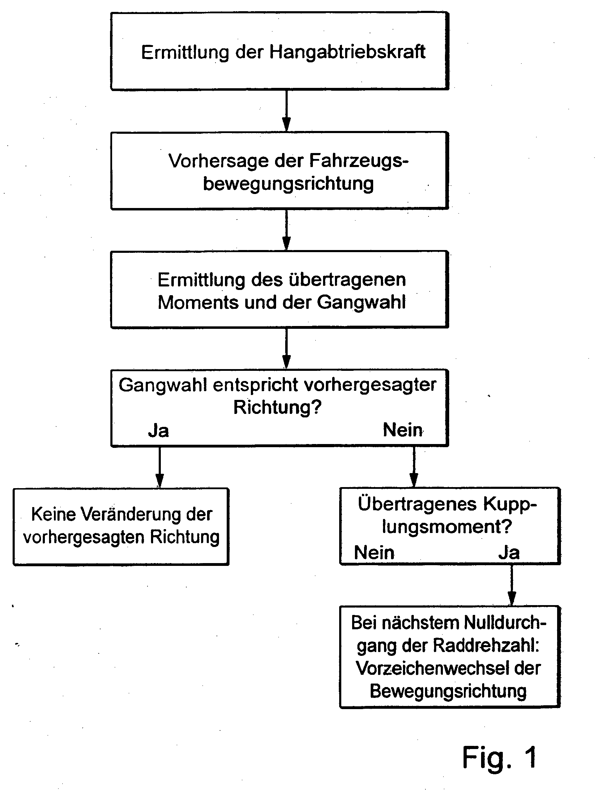

Fig.1 eine schematische Darstellung des Verfahrens

Zunächst ermittelt ein Fahrzeugbeobachter aus fahrzeugspezifischen und umgebungsspezifischen Werten eine prognostizierte Beschleunigung. Die prognostizierte Beschleunigung ergibt sich aus der Gleichung

$$M_{Kupp} * \frac{i_{ges}}{r} * \eta_{ges} = e * m_{Fzg} * a_{Fzg} + m_{Fzg} * g * (f * \cos\alpha * sign(v) + \sin\alpha) + c_w * A * \frac{\rho}{2} * v^2$$

mit:

$$e = 1 + \frac{j_{ges}}{m * r_{dyn}}$$

Die fahrzeugspezifischen Parameter

| | |
|---|---|
| $v$: | Fahrzeuggeschwindigkeit |
| $a_{Fzg}$: | Fahrzeugbeschleunigung |
| $c_w$: | Luftwiderstand |
| $A$: | Querschnittsfläche |
| $e$: | Massenfaktor |
| $f$: | Rollwiderstand |
| $i_{ges}$: | Übersetzung |
| $r$ | Reifenradius |
| $\eta_{ges}$: | Gesamtwirkungsgrad |

können als fahrzeugspezifisch und daher als bekannt angenommen werden. Die Fahrzeugmasse $m_{Fzg}$ und die Steigung $\alpha$ werden durch einen Fahrzeugbeobachter in der Software geschätzt, solange die Bremse nicht betätigt wird. Das Drehmoment, das von der Kupplung übertragen wird, das Kupplungsmoment $M_{Kupp}$ ist ebenfalls in der Software bekannt.

Beim Ankriechen ist die Bremskraft $F_{Brems} = 0$. Der geschwindigkeitsabhängige Luftwiderstand kann bei kleinen Geschwindigkeiten wie beim Ankriechen des Fahrzeugs vernachlässigt werden. Daraus folgt die Gleichung:

$$M_{Kupp} * \frac{i_{ges}}{r} * \eta_{ges} = e * m_{Fzg} * a_{Fzg} + m_{Fzg} * g * (f * \cos\alpha * sign(v) + \sin\alpha)$$

Daraus ergibt sich

$$a_{Fzg} = \frac{M_{Kupp} * \frac{i_{ges}}{r} * \eta_{ges} - m_{Fzg} * g * (f * \cos\alpha * sign(v) + \sin\alpha)}{e * m_{Fzg}}$$

Dabei sind alle Werte auf der rechten Seite bekannt bzw. können durch den Fahrzeugbeobachter abgeschätzt werden. Dabei werden einige Werte, wie zum Beispiel das Gefälle des Untergrundes, auf dem das Fahrzeug steht, schon zuvor, als das Fahrzeug sich bewegte abgeschätzt und dann von dem Fahrzeugbeobachter gespeichert.

Ergibt sich beim Ankriechen aus der Gleichung die Gefahr des Zurückrollens, ist also $a_{Fzg}$ kleiner Null beziehungsweise liegt unter einem negativen Schwellwert, so wird angenommen, dass die ersten Drehzahlen, die von den Drehzahlsensoren erfasst werden, negativ sind. Die Raddrehzahlen, die dann im Verlauf des Ankriechens oder Anfahrens von den Drehzahlsensoren ermittelt und weitergeleitet werden, werden also zuerst als eine Rückwärts-fahrt interpretiert und somit entsprechend, wie z.B. mit einem positiven oder negativen Vorzeichen, gekennzeichnet.

Ergibt sich beim Ankriechen aus der Gleichung die Gefahr, das der Wagen nach vorne rollt, zum Beispiel, da er auf einem nach vorne abschüssigen Untergrund steht, ist also $a_{Fzg}$ größer Null oder größer als ein positiver Schwellwert, so wird angenommen, dass die ersten Drehzahlen, der angetriebenen Räder positiv sind und die Drehzahlen, die von den Drehzahlsen-soren ermittelt werden, werden entsprechend gekennzeichnet, zum Beispiel indem sie mit einem positiven Vorzeichen versehen werden.

Ergibt sich aus dem mathematischen Bewegungsmodell, dass das Fahrzeug in keine Richtung beschleunigt wird, da das anfängliche Kupplungsmoment $M_{Kupp}$ zu klein ist und keine nennenswerte Steigung des Untergrunds ermittelt wurde, so wird das Vorzeichen der entsprechenden Drehzahlen bei Bewegung des Fahrzeugs entsprechend der Gangwahl gewählt.

Ergibt sich nun zum Beispiel durch eine Fahrzeugsteuerung an der Kupplung ein weiterer Momentenaufbau, so wird nun unterschieden, welche Fahrstufe gewählt worden ist und welche Ausgangswerte für die Fahrzeugsbeschleunigung $a_{Fzg}$ vorliegen. Wurde die Fahrstufe D, zum Beispiel durch den Fahrer, gewählt, so besteht die hohe Wahrscheinlichkeit, dass die Bewegungsgleichung bei höheren Kupplungsmomenten positive Fahrzeugbeschleunigungswerte $a_{Fzg}$

liefert. Waren die ersten Fahrzeugsbeschleunigungswerte negativ und liegen durch die höheren Kupplungsmomente nun diese positiven Fahrzeugsbeschleunigungswerte $a_{Fzg}$ vor, so wird, sobald die Drehzahlen Null erreichen bzw. einen Nulldurchgang vollziehen, ein Vorzeichenwechsel der Drehzahlen von negativ auf positiv vorgenommen.

Wurde die Fahrstufe R gewählt, ist also die bevorzugte Fahrzeugbewegungsrichtung negativ, so besteht eine hohe Wahrscheinlichkeit, dass bei einem höherem, von der Kupplung übertragenen Drehmoment als das ursprünglich betrachtete $M_{Kupp}$ die Fahrzeugbewegung negativ ist. Ist die ursprünglich prognostizierte Fahrzeugbeschleunigung $a_{Fzg}$ positiv, so wird davon ausgegangen, dass der nächste Nulldurchlauf der Drehzahlwerte, also wenn die Drehzahlwerte von einem von Null verschiedenen Wert auf im Wesentlichen Null abfallen und dann wieder ansteigen, die an den Nulldurchlauf anschließenden Drehzahlwerte negativ, also in Richtung der bevorzugten Fahrzeugbewegungsrichtung sind.

## Patentansprüche

1. Verfahren zur Erfassung der Bewegungsrichtung eines Fahrzeugs beim Anfahren aus dem Fahrzeugstillstand, wobei die Fahrzeuggeschwindigkeit v betragsmäßig, mittels eines Raddrehzahlsensors bewegungsrichtungsinformationsios erfasst wird und mittels eines mathematischen Bewegungsmodells die Bewegungsrichtung prognostiziert wird, wobei das von einer Fahrzeugkupplung übertragene Drehmoment erfasst wird und unter Berücksichtigung sowohl der Fahrzeuggeschwindigkeit als auch dem von der Kupplung übertragenen Drehmoments die Prognose der Bewegungsrichtung angepasst wird, wobei sich die Prognose aus der Fahrzeugbeschleunigung $a_{Fzg}$, die unter Berücksichtigung des übertragenden Kupplungsmoments sowie der Hangabtriebskraft ermittelt wird, ergibt, wobei die Fahrzeugmasse $m_{Fzg}$ und die Steigung $\alpha$ durch einen Fahrzeugbeobachter in der Software geschätzt werden, und wobei das Gefälle $\alpha$ des Untergrundes, auf dem das Fahrzeug steht, schon zuvor, während der Bewegungsphase vor dem Fahrzeugstillstand, als das Fahrzeug sich noch bewegte, abgeschätzt und dann von dem Fahrzeugbeobachter gespeichert werden, **dadurch gekennzeichnet, dass**, wenn beim Ankriechen $a_{Fzg}$ kleiner Null ist oder unter einem negativen Schwellwert liegt, angenommen wird, dass das Fahrzeug zurückrollt und, wenn beim Ankriechen $a_{Fzg}$ größer Null oder größer als ein positiver Schwellwert ist, angenommen wird, dass das Fahrzeug nach vorne rollt und wobei bei weiterem Kupplungsmomentenaufbau bei einem Nulldurchgang der Fahrzeuggeschwindigkeit die prognostizierte Bewegungsrichtung in ihrem Vorzeichen geändert wird, wobei ein Nulldurchgang der Fahrzeuggeschwindigkeit vorliegt, wenn sie bevor und nachdem sie einen von Null verschiedenen Wert aufweist, einen oder mehrere Werte von Null annimmt.

2. Verfahren nach Anspruch 1, **dadurch gekennzeichnet, dass** die Bewegungsrichtung des Fahrzeugs vor und/oder während des Anfahrens mittels dem mathematischen Bewegungsmodells prognostiziert wird.

## Claims

1. Method for determining the direction of movement of a vehicle when starting from a stationary state of the vehicle, wherein the velocity v of the vehicle is determined in terms of absolute value and without information about the direction of movement by means of a wheel speed sensor, and the direction of movement is predicted by means of a mathematical movement model, wherein the torque which is transmitted by a vehicle clutch is determined and the prediction of the direction of movement is adapted by taking into account both the speed of the vehicle and the torque transmitted by the clutch, wherein the prediction is obtained from the vehicle acceleration $a_{veh}$ which is obtained by taking into account the transmitted clutch torque and the slope downhill force, wherein the vehicle mass $m_{veh}$ and the positive gradient $\alpha$ are estimated by a vehicle observer in the software, and wherein the negative gradient $\alpha$ of the underlying surface on which the vehicle is located is already estimated in advance, during the movement phase before the stationary state of the vehicle when the vehicle was still moving, and is then stored by the vehicle observer, **characterized in that** if in the case of a creeping start $a_{veh}$ is less than zero or below a negative threshold value it is assumed that the vehicle is rolling back and, if in the case of a creeping start $a_{veh}$ is greater than zero or greater than a positive threshold value it is assumed that the vehicle is rolling forward, and wherein in the case of a further build up of clutch torque in the case of a zero crossover of the speed of the vehicle the sign of the predicted direction of movement is changed, wherein a zero crossover of the speed of the vehicle is present if it assumes one or more values of zero before and after it has a value which is different from zero.

2. Method according to Claim 1, **characterized in that** the direction of movement of the vehicle is predicted by means of the mathematical movement model before and/or during the starting.

**Revendications**

1. Procédé destiné à la détermination du sens de déplacement d'un véhicule lors du démarrage à l'arrêt du véhicule, dans lequel la vitesse du véhicule v est détectée en valeur absolue, au moyen d'un capteur de vitesse de rotation des roues sans informations sur le sens de déplacement, et dans lequel, au moyen d'un modèle de déplacement mathématique, le sens de déplacement est pronostiqué, dans lequel le couple transmis par un embrayage du véhicule est détecté et, en tenant compte à la fois de la vitesse du véhicule ainsi que du couple transmis par l'embrayage, le pronostic du sens de déplacement est adapté, dans lequel le pronostic s'obtient à partir de l'accélération du véhicule $a_{Fzg}$, qui est déterminée en tenant compte du couple d'embrayage transmis ainsi que de la force descentionnelle, dans lequel la masse du véhicule $m_{Fzg}$ et la pente $\alpha$ sont estimées par un observateur du véhicule dans le logiciel et dans lequel la pente $\alpha$ du sol sur lequel est posé le véhicule est estimée déjà préalablement, pendant la phase de déplacement avant l'arrêt du véhicule alors que le véhicule se déplaçait encore, et est ensuite mémorisée par l'observateur du véhicule, **caractérisé en ce que**, lorsque, en cas de roulage au pas, $a_{Fzg}$ est inférieure à zéro ou en dessous d'une valeur seuil négative, on suppose que le véhicule se déplace en arrière et, lorsque, en cas de roulage au pas, $a_{Fzg}$ est supérieure à zéro ou supérieure à une valeur seuil positive, on suppose que le véhicule se déplace vers l'avant et dans lequel, lors d'une augmentation supplémentaire du couple d'embrayage lors d'un passage par zéro de la vitesse du véhicule, le signe du sens de déplacement pronostiqué est changé, un passage par zéro de la vitesse du véhicule se présentant lorsque, avant et après qu'elle présente une valeur différente de zéro, elle adopte une ou plusieurs valeurs nulles.

2. Procédé selon la revendication 1, **caractérisé en ce que** le sens de déplacement du véhicule avant et/ou pendant le démarrage est pronostiqué au moyen du modèle de déplacement mathématique.

Ermittlung der Hangabtriebskraft

Vorhersage der Fahrzeugsbewegungsrichtung

Ermittlung des übertragenen
Moments und der Gangwahl

Gangwahl entspricht vorhergesagter
Richtung?
Ja                                    Nein

Keine Veränderung der
vorhergesagten Richtung

Übertragenes Kupplungsmoment?
Nein                    Ja

Bei nächstem Nulldurchgang der Raddrehzahl:
Vorzeichenwechsel der
Bewegungsrichtung

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02062640 A
- EP 1193151 A2

- FR 2857925 A1